# FASCICULE DE BREVET EUROPEEN

(11) **EP 3 738 195 B1**
(45) Date de publication et mention de la délivrance du brevet: **19.07.2023**
(21) Numéro de dépôt: 18815753.1
(22) Date de dépôt: 17.12.2018
(51) Int. Cl.: H02K 3/24, H02K 3/51, H02K 7/04, H02K 9/19

(54) **COURONNE D'ÉQUILIBRAGE DE ROTOR RÉALISÉE EN FONDERIE**
DURCH GIESSEN HERGESTELLTE ROTORAUSWUCHTKRONE
ROTOR BALANCING CROWN PRODUCED BY CASTING

(30) Priorité: 11.01.2018 FR 1850216
(43) Date de publication de la demande: 18.11.2020
(73) Titulaire: Renault s.a.s, 92100 Boulogne Billancourt (FR)
(72) Inventeur: TAVAKOLI, Shahab, 92420 Vaucresson (FR)
(74) Mandataire: Renault Group
(86) Numéro de dépôt international: PCT/EP2018/085164
(87) Numéro de publication internationale: WO 2019/137738

(56) Documents cités:
- WO-A1-2005/099070
- WO-A1-2012/007920
- US-A1- 2013 062 977

## Description

L'invention concerne les couronnes d'équilibrage de machines électriques à rotor bobiné.

Les rotors bobinés présentent de nombreux avantages, notamment l'amélioration du rendement moteur en optimisant à la fois le courant rotorique et les courants statoriques, ainsi que le fait de permettre de manière simplifiée un réglage de la vitesse en agissant directement sur les courants des bobinages du rotor.

Cependant, un inconvénient bien connu des rotors bobinés est l'échauffement produit par le passage du courant électrique dans les bobinages rotoriques.

Sachant qu'environ 30% à 40% de l'échauffement des bobinages d'un rotor bobiné se concentre au voisinage des têtes de bobines, situées aux extrémités longitudinales du rotor, une méthode de refroidissement connue consiste à projeter de l'huile, ou tout autre liquide de refroidissement, diélectrique et caloporteur, sur les têtes de bobines.

Afin d'assurer un maintien ferme de la structure du rotor, notamment lorsque le rotor est entraîné en rotation à grande vitesse, on installe à chaque extrémité longitudinale du rotor, des couronnes de maintien mécanique, interdisant à l'empilage de tôle de la structure de se disloquer sous l'effet de la force centrifuge.

Les documents WO2012/007920, WO 2005/099070 et US 2013/062977divulguent des couronnes pour rétention et refroidissement des tettes de bobinage.

Cependant, le liquide de refroidissement projeté aux extrémités longitudinales du rotor s'accumule dans les couronnes de maintien mécanique des bobinages.

Les couronnes de maintien servent aussi d'élément d'équilibrage. On procède pour cela généralement par enlèvement local de matière de la couronne, par exemple par usinage.

Ainsi, ces couronnes forment à chaque extrémité du rotor un anneau entourant définissant un logement également sensiblement annulaire.

La matière de la couronne et le logement entourent une ouverture centrale de la couronne, conduisant aux têtes de bobines rotoriques.

Lorsqu'un liquide de refroidissement est projeté sur les têtes de bobines, ces couronnes retiennent alors le liquide, qui s'accumule notamment sur les parois circonférentielles internes de l'ouverture centrale formée par la couronne en saillie du rotor.

Or, le liquide de refroidissement ainsi accumulé dans la couronne, et sous l'effet de la force centrifuge, crée une surface lisse contre la paroi circonférentielle interne de la couronne qui par capillarité s'infiltre dans l'entrefer.

Un problème est que le liquide de refroidissement présent dans l'entrefer crée des effets de frottements entre le stator et le rotor, ce qui diminue le rendement de la machine électrique.

Il existe donc le besoin pour une solution permettant d'améliorer le refroidissement des bobinages rotoriques d'une machine à rotor bobiné et ne présentant pas les inconvénients de l'art antérieur.

A cette fin, une couronne de maintien mécanique de bobinages rotoriques selon l'invention, est configurée pour être installée à une extrémité longitudinale d'un rotor. La couronne définit :
- un anneau de maintien configuré pour encercler une portion d'extrémité de bobinages rotoriques, l'anneau étant de section radiale concave de manière à définir à un logement annulaire vers l'intérieur de l'anneau, le logement étant prévu pour coiffer une portion d'extrémité de bobinages rotoriques ;
- une ouverture centrale configurée pour déboucher axialement sur les bobinages, de manière à pouvoir projeter du liquide de refroidissement sur les bobinages rotoriques pendant la rotation du rotor.

La couronne est moulée de manière monobloc en alliage métallique léger, et comporte au moins deux conduits d'évacuation aptes à évacuer radialement du liquide de refroidissement éjecté par force centrifuge à partir des bobinages rotoriques.

Le logement destiné à coiffer les bobinages peut être éventuellement angulairement segmenté en plusieurs portions d'anneau.

Par section radiale, on entend ici une section par un plan radial, c'est-à-dire par un plan contenant l'axe géométrique de rotation du rotor, et contenant un axe géométrique de l'anneau.

La couronne comporte, de moulage, des tirants de renfort formant des zones de renfort et s'étendant chacun dans un plan radial entre deux extrémités axiales de ladite section radial concave.

Les tirants de renfort sont sensiblement rectilignes et s'étendant en oblique par rapport à l'axe de rotation de l'anneau.

Avantageusement, une portion du logement annulaire peut être ménagée derrière les tirants de renfort, de manière à former un passage annulaire angulairement continu sur toute la circonférence de l'anneau, entre les tirants de renfort et une surface radialement intérieure de l'anneau de maintien.

Du liquide centrifugé peut ainsi circuler aisément pour se répartir autour de l'anneau et /ou pour sortir par les conduits d'évacuation.

Les conduits d'évacuation peuvent être formés par des orifices traversant l'anneau pour déboucher dans le passage annulaire à une extrémité du conduit. A une autre extrémité du conduit, celui-ci débouche radialement, ou débouche en oblique par rapport à l'axe de l'anneau, sur une face circonférentielle extérieure de l'anneau.

Les conduits d'évacuations peuvent être sensiblement centrés, angulairement, chacun sur un tirant de renfort. La présence des tirants de renfort compense ainsi partiellement au moins l'effet de concentrations de contraintes induit par la présence des conduits. On peut aussi considérer par exemple comme un tirant de renfort unique, deux barreaux de renfort situés angulairement de part et d'autre du même conduit, à une distance angulaire du conduit inférieure ou égale au diamètre maximal du conduit.

La couronne peut comporter au moins trois tirants de renfort.

Au moins trois des tirants de renfort peuvent alors être traversés chacun par un orifice sensiblement axial débouchant sur une surface axiale extérieure de l'anneau.

Selon un autre mode de réalisation, au moins trois des tirants de renfort sont traversés chacun par un orifice sensiblement axial aligné avec un deuxième orifice axial ménagé au travers de l'anneau débouchant sur une surface axiale extérieure de l'anneau.

Les orifices axiaux traversant les tirants de renfort permettent ainsi d'insérer des vis/goujons/tirants d'assemblage de la couronne, en limitant encore une fois l'effet d'entaille engendré par la présence de ces orifices.

La couronne peut être moulée en alliage à base d'aluminium, en autre alliage métallique léger, voire plus généralement en alliage métallique.

La couronne telle que décrite précédemment peut comporter au moins 3 tirants de renfort, avantageusement entre 4 et 16 tirants de renfort, par exemple 8 tirants de renfort.

Respectivement, la couronne peut comporter au moins 3 vis/goujons/tirants d'assemblage, avantageusement entre 4 et 16, par exemple 8.

L'invention concerne également un moteur dont au moins une extrémité des bobinages du rotor est coiffée d'une couronne selon l'invention, de préférence de deux couronnes selon l'invention, soit une couronne à chacune des extrémités axiales des bobinages du rotor.

Quelques buts, caractéristiques et avantages de l'invention apparaîtront à la lecture de la description suivante, donnée uniquement à titre d'exemple non limitatif, et faite en référence aux dessins annexés sur lesquels :
La figure 1 est une vue en perspective d'une couronne d'équilibrage de rotor selon l'invention, vue par sa face intérieure, c'est-à-dire par sa face concave venant coiffer une extrémité des bobinages du rotor ;
La figure 2 est une vue en perspective d'une couronne d'équilibrage de rotor selon l'invention, vue par sa face extérieure, c'est-à-dire par ses surfaces extérieures aux bobinages du rotor ;
La figure 3 est une vue de détail, en perspective, d'un tirant de renfort et de plusieurs orifices particuliers ménagés sur la couronne selon l'invention.

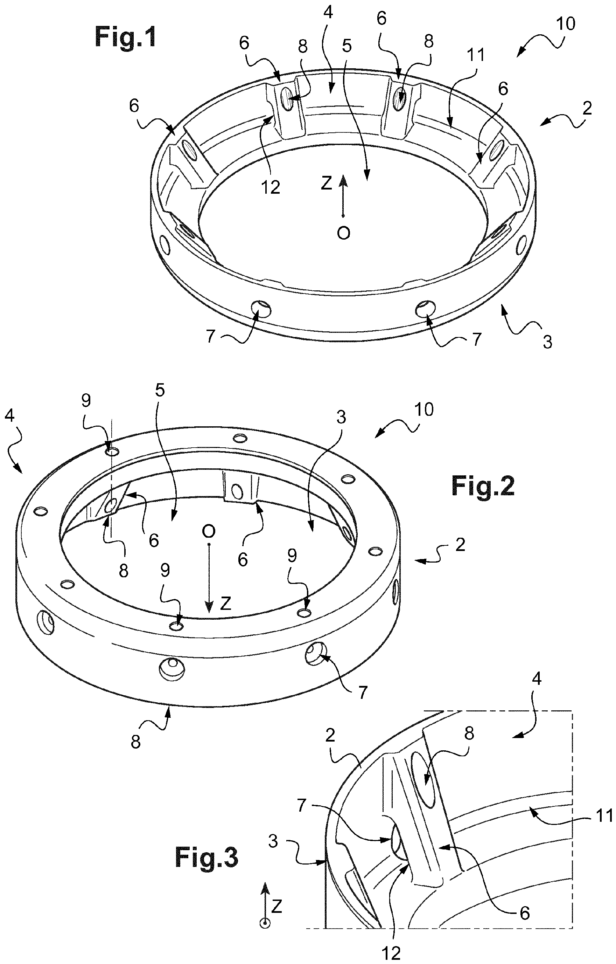

Tel qu'illustré sur la figure 1, la couronne d'équilibrage 10, comprend un anneau de maintien 2 moulé monobloc en alliage à base d'aluminium, ou en autre alliage métallique.

L'anneau 2 comprend une face extérieure 3 globalement convexe, et une face intérieure 4 globalement concave. La face 4 concave définit un logement annulaire intérieur 11 venant coiffer une extrémité des bobinages du rotor.

L'anneau de centre O entoure une ouverture centrale 5 coiffant l'extrémité d'un rotor non réprésenté autour de son axe de révolution [Oz), cet axe étant orienté selon une direction axiale. Des tirants de renfort 6 renforcent l'anneau en traction suivant les directions comprises dans les plans radiaux localement associés aux positions angulaires de ces tirants de renfort.

Des conduits d'évacuation 7 permettent de laisser sortir du liquide de refroidissement éjecté radialement des bobinages (non représentés) sous l'effet de la force centrifuge.

Les tirants de renfort sont traversés chacun par un premier orifice sensiblement axial 8 aligné avec un deuxième orifice axial 9 (visible sur la figure 2) ménagé au travers de l'anneau 2, et débouchant sur une surface axiale extérieure de l'anneau.

Une portion du logement annulaire 11 forme un passage annulaire 12 angulairement continu et s'étendant autour de toute la circonférence de l'anneau, entre les tirants de renfort et l'anneau de maintien.

La figure 2 représente la même couronne que celle de la figure 1, et permet de voir les orifices 9 alignés axialement avec les orifices 8 traversant les tirants de renfort.

La figure 3 permet de voir plus précisément un exemple de géométrie locale au niveau du tirant de renfort et sous le tirant de renfort, pour optimiser à la fois la résistance de l'anneau et la circulation du fluide de refroidissement. On retrouve sur les figures 2 et 3 des éléments communs à la figure 1, les mêmes éléments étant désignés par les mêmes références.

L'invention ne se limite pas au mode de réalisation décrit, et peut se décliner en de nombreuses variantes en terme par exemple de matériaux, de section et de lignes moyennes des tirants de renfort, de profil de l'anneau entre les tirants de renfort.

La géométrie de couronne moulée selon l'invention permet de combiner, dans une couronne simple à réaliser, une bonne résistance mécanique et l'intégration des fonctions de fixation (vis/goujons/tirants axiaux pouvant être insérés dans les orifices 8,9), des fonctions de maintien des bobinages (logement annulaire) et des fonctions de refroidissement (conduits d'évacuation 7).

## Revendications

1. Couronne (10) de maintien mécanique de bobinages rotoriques, configurée pour être installée à une extrémité longitudinale d'un rotor, la couronne définissant :
- un anneau de maintien (2), l'anneau étant de section radiale concave de manière à définir un logement annulaire (11) vers l'intérieur de l'anneau (2), le logement (11) étant prévu pour coiffer une portion d'extrémité de bobinages rotoriques,
- une ouverture centrale (5) configurée pour déboucher axialement sur les bobinages, de manière à pouvoir projeter du liquide de refroidissement sur les bobinages rotoriques pendant la rotation du rotor ;
ladite couronne (10) est moulée de manière monobloc en alliage métallique léger, **caractérisée en ce que** ladite couronne comporte au moins deux conduits d'évacuation (7) aptes à évacuer radialement du liquide de refroidissement éjecté par force centrifuge à partir des bobinages rotoriques, ladite couronne comportant, de moulage, des tirants (6) de renfort formant des zones de renfort et s'étendant chacun dans un plan radial entre deux extrémités axiales de ladite section radiale concave, les tirants de renfort (6) étant sensiblement rectilignes et s'étendant en oblique par rapport à l'axe de rotation (z) de l'anneau (2).

2. Couronne selon la revendication 1, dans laquelle une portion du logement annulaire (11) forme un passage annulaire (12) angulairement continu sur toute la circonférence de l'anneau, passant entre les tirants de renfort et une surface radialement intérieure de l'anneau de maintien (2).

3. Couronne selon la revendication 2, dans laquelle les conduits (7) sont formés par des orifices traversant l'anneau (2) pour déboucher dans le passage annulaire à une extrémité, et, à une autre extrémité du conduit (7), pour déboucher radialement, ou pour déboucher en oblique par rapport à l'axe (z) de rotation l'anneau, sur une face circonférentielle extérieure de l'anneau (2).

4. Couronne selon l'une quelconque des revendications 1 à 3, dans laquelle les conduits d'évacuations (7) sont sensiblement centrés, angulairement, chacun sur un tirant (6) de renfort.

5. Couronne selon l'une quelconque des revendications 1 à 4, comportant au moins trois tirants de renfort (6), et dans laquelle au moins trois des tirants de renfort (6) sont traversés chacun par un orifice (8) sensiblement axial débouchant sur une surface axiale extérieure de l'anneau.

6. Couronne selon l'une quelconque des revendications 1 à 4, comportant au moins trois tirants de renfort (6), et dans laquelle au moins trois des tirants de renfort (6) sont traversés chacun par un orifice (8) sensiblement axial aligné avec un deuxième orifice axial (9) ménagé au travers de l'anneau (2) débouchant sur une surface axiale extérieure de l'anneau.

7. Couronne selon l'une quelconque des revendications précédentes, moulée en alliage à base d'aluminium.

8. Couronne suivant l'une des revendications 1 à 4 ou 7, comportant au moins 3 tirants de renfort.

## Patentansprüche

1. Krone (10) zum mechanischen Halten von Rotorwicklungen, die dazu konfiguriert ist, an einem Längsende eines Rotors installiert zu sein, wobei die Krone Folgendes definiert:
- einen Haltering (2), wobei der Ring einen konkaven radialen Querschnitt aufweist, um eine ringförmige Aufnahme (11) zum Inneren des Rings (2) hin zu definieren, wobei die Aufnahme (11) dafür vorgesehen ist, einen Endabschnitt von Rotorwicklungen abzudecken,
- eine mittige Öffnung (5), die dazu konfiguriert ist, axial an den Wicklungen zu münden, sodass während des Drehens des Rotors Kühlflüssigkeit auf die Rotorwicklungen gespritzt werden kann;
wobei die Krone (10) einstückig aus einer Leichtmetalllegierung geformt ist, **dadurch gekennzeichnet, dass** die Krone mindestens zwei Abfuhrkanäle (7) umfasst, die dazu fähig sind, durch Zentrifugalkraft aus den Rotorwicklungen ausgestoßene Kühlflüssigkeit radial abzuführen, wobei die Krone durch Formen erzeugte Verstärkungsstreben (6) umfasst, die Verstärkungsbereiche bilden und sich jeweils in einer radialen Ebene zwischen zwei axialen Enden des konkaven radialen Querschnitts erstrecken, wobei die Verstärkungsstreben (6) im Wesentlichen geradlinig sind und sich mit Bezug auf die Drehachse (z) des Rings (2) schräg erstrecken.

2. Krone nach Anspruch 1, wobei ein Abschnitt der ringförmigen Aufnahme (11) einen ringförmigen Durchgang (12) bildet, der über den gesamten Umfang des Rings winkelförmig kontinuierlich ist und zwischen den Verstärkungsstreben und einer radial innenliegenden Oberfläche des Halterings (2) verläuft.

3. Krone nach Anspruch 2, wobei die Kanäle (7) durch Löcher gebildet sind, die den Ring (2) durchqueren, um an einem Ende an dem ringförmigen Durchgang zu münden und an einem anderen Ende des Kanals (7) entweder radial oder mit Bezug auf die Drehachse (z) des Rings schräg an einer Außenumfangsfläche des Rings (2) zu münden.

4. Krone nach einem beliebigen der Ansprüche 1 bis 3, wobei die Abfuhrkanäle (7) im Wesentlichen jeweils auf eine Verstärkungsstrebe (6) winkelförmig zentriert sind.

5. Krone nach einem beliebigen der Ansprüche 1 bis 4, die mindestens drei Verstärkungsstreben (6) umfasst, und wobei mindestens drei der Verstärkungsstreben (6) jeweils von einem im Wesentlichen axialen Loch (8) durchquert werden, das an einer axialen Außenoberfläche des Rings mündet.

6. Krone nach einem beliebigen der Ansprüche 1 bis 4, die mindestens drei Verstärkungsstreben (6) umfasst, und wobei mindestens drei der Verstärkungsstreben (6) jeweils von einem im Wesentlichen axialen Loch (8) durchquert werden, das nach einem zweiten axialen Loch (9) ausgerichtet ist, das durch den Ring (2) verläuft und an einer axialen Außenoberfläche des Rings mündet.

7. Krone nach einem beliebigen der vorhergehenden Ansprüche, die aus einer Legierung auf Aluminiumbasis geformt ist.

8. Krone nach einem der Ansprüche 1 bis 4 oder 7, die mindestens 3 Verstärkungsstreben umfasst.

## Claims

1. Crown (10) for mechanically retaining rotor windings that is configured to be installed at a longitudinal end of a rotor, the crown defining:
- a retaining ring (2), the ring being of concave radial cross section so as to define an annular housing (11) toward the inside of the ring (2), the housing (11) being provided to cover an end portion of rotor windings,
- a central opening (5) configured to open axially onto the windings so as to allow cooling liquid to be sprayed onto the rotor windings during the rotation of the rotor;
said crown (10) is molded in monobloc fashion from light metal alloy, **characterized in that** said crown comprises at least two discharge ducts (7) capable of radially discharging cooling liquid ejected by centrifugal force from the rotor windings, said crown comprising, as a result of molding, reinforcing struts (6) forming reinforcing regions and each extending in a radial plane between two axial ends of said concave radial cross section, the reinforcing struts (6) being substantially rectilinear and extending obliquely with respect to the axis of rotation (z) of the ring (2).

2. Crown according to Claim 1, in which a portion of the annular housing (11) forms an angularly continuous annular passage (12) over the whole circumference of the ring, passing between the reinforcing struts and a radially inner surface of the retaining ring (2).

3. Crown according to Claim 2, in which the ducts (7) are formed by orifices traversing the ring (2) to open into the annular passage at one end, and, at another end of the duct (7), to open radially, or to open obliquely with respect to the axis (z) of rotation of the ring, onto an outer circumferential face of the ring (2).

4. Crown according to any one of Claims 1 to 3, in which the discharge ducts (7) are each substantially centered, angularly, on a reinforcing strut (6).

5. Crown according to any one of Claims 1 to 4, comprising at least three reinforcing struts (6), and in which crown at least three of the reinforcing struts (6) are each traversed by a substantially axial orifice (8) opening onto an outer axial surface of the ring.

6. Crown according to any one of Claims 1 to 4, comprising at least three reinforcing struts (6), and in which crown at least three of the reinforcing struts (6) are each traversed by a substantially axial orifice (8) aligned with a second axial orifice (9) formed through the ring (2) and opening onto an outer axial surface of the ring.

7. Crown according to any one of the preceding claims, which is molded from an aluminum-based alloy.

8. Crown according to one of Claims 1 to 4 or 7, comprising at least 3 reinforcing struts.
